Europäisches Patentamt

European Patent Office

Office européen des brevets

(11) Veröffentlichungsnummer: **0 391 120**
A1

## (12) EUROPÄISCHE PATENTANMELDUNG

(21) Anmeldenummer: 90105131.8

(22) Anmeldetag: **19.03.90**

(51) Int. Cl.5: **B23P 19/08, B65G 47/24**

(30) Priorität: 03.04.89 DE 3910668

(43) Veröffentlichungstag der Anmeldung:
**10.10.90 Patentblatt 90/41**

(84) Benannte Vertragsstaaten:
**DE ES FR GB IT**

(71) Anmelder: **ManuMatik Produktionssysteme GmbH**
**Schlosserstrasse 15**
**D-7440 Nürtingen(DE)**

(72) Erfinder: **Henzler, Adolf**
**Talstrasse 51**
**D-7440 Nürt-Raidwangen(DE)**
Erfinder: **Henschel, Karl-Heinz**
**Tiefenbachstrasse 19**
**D-7440 Nürtingen(DE)**
Erfinder: **Kazmaier, Bernd**
**Wolfgartenweg 3**
**D-7433 Dettingen/Erms(DE)**

(54) Verfahren und Vorrichtung zur automatischen Montage von Sicherungsringen.

(57) Zur automatischen Montage von geschlitzten Sicherungsringen (1) auf Wellen und Achsen (3) oder dergl. werden die mit ihrem Spreizschlitz (4) undefiniert ausgerichteten Sicherungsringe einzeln zugeführt, auf einen Aufnahmedorn (21) geschoben und vorgespreizt sowie durch Drehen des Aufnahmedornes mit ihrer den Spreizschlitz begrenzenden Anschlagnase (6) bis gegen einen ortsfesten Anschlag (33) bewegt und dabei bezüglich der Ausrichtung des Spreizschlitzes einheitlich definiert lageorientiert.

Fig. 7

EP 0 391 120 A1

# Verfahren und Vorrichtung zur automatischen Montage von Sicherungsringen

Die Erfindung betrifft ein Verfahren zur automatischen Montage von mit einem radial durchgehenden Spreizschlitz versehenen, radial federnden Sicherungsringen in Ringnuten zylindrischer Werkstücke, bei dem die Sicherungsringe durch Aufdornen auf einen größeren Innendurchmesser aufgespreizt, durch Aufkeilen bzw. Ausfüllen des Spreizschlitzes im gespreizten Zustand gehalten, in einer zum Werkstück zentrierten Lage über die Ringnuten verbracht und entspannt bzw. montiert werden.

Die Erfindung betrifft außerdem ein eine Vorrichtung zur automatischen Montage von mit einem radial durchgehenden Spreizschlitz versehenen, radial federnden Sicherungsringen in Ringuten zylindrischer Werkstücke, mit einem Aufnahmedorn zum Aufspreizen der Sicherungsringe sowie einem den Spreizschlitz aufkeilenden bzw. ausfüllenden, sich bei der Montage des Sicherungsringes bis zur Ringnut des Werkstückes erstreckenden Paßstück.

Die gattungsgemäß definierten, auch unter der Bezeichnung "Seegerringe" bekannten Sicherungsringe werden im Maschinenbau, insbesondere beim Getriebebau, Motorenbau und auch Fahrzeugbau, bei der Montage von Bauteilen, wie Lager, Dichtungen, Deckel oder dergleichen, auf zylindrischen Teilen, wie Wellen oder Achsen, zur axialen Sicherung eingesetzt.

Der Erfindung liegt die Aufgabe zugrunde, die Wirtschaftlichkeit, Leistungsfähigkeit und Flexibilität derartiger Verfahren und Vorrichtungen zu verbessern.

Diese Aufgabe wird erfindungsgemäß dadurch gelöst, daß die Sicherungsringe in willkürlicher Orientierung zugeführt und aufgedornt werden und daß sie anschließend im aufgedornten Zustand individuell drehsinnig lageorientiert werden. Derart ausgerichtete Sicherungsringe können dann anschließend problemlos auf bekannte Weise gehandhabt werden. Gemäß einer vorteilhaften Weiterbildung kann zur Lageorientierung ein ohnehin vorhandenes Handhabungsmittel derart eingesetzt werden, daß die Sicherungsringe durch Drehen des Aufnahmedornes um seine Längsachse in eine einheitliche drehrichtige Lage verbracht werden. Es wäre denkbar, die jeweilige individuelle Zuführungsanlage der Sicherungsringe hinsichtlich der Orientierung des Spreizschlitzes zu überwachen und in Abhängigkeit davon den Aufnahmedorn um einen entsprechenden Drehwinkel zu verdrehen. Eine besonders einfache, erfindungsgemäß ausgestattete Verfahrensweise besteht hingegen darin, daß die Sicherungsringe mit einem den Spreizschlitz begrenzenden Ende gegen einen definierten Anschlag gedreht werden. Hierbei kann der Aufnahmedorn immer um den gleichen Drehwinkel, beispielsweise um 360°, verdreht werden, wobei der Aufnahmedorn sich bei der überschüssigen Drehbewegung einfach innerhalb des festgehaltenen Sicherungsringes weiterdreht.

Ein zügiger Verfahrensablauf läßt sich gemäß einer Weiterbildung dadurch erreichen, daß die Sicherungsringe in Aufeinanderfolge einzeln, flachliegend zugeführt, aufgedornt und gedreht werden, wobei die Effektivität nach einem weiteren Vorschlag noch dadurch gesteigert werden kann, daß das Aufdornen bzw. Aufspreizen und Lageorientieren der Sicherungsringe räumlich und zeitlich unabhängig von ihrer Montage auf den Werkstücken erfolgt.

Die Vorrichtung zur Durchführung des eingangs bezeichneten Verfahrens ist derart ausgebildet, daß die mit willkürlicher Orientierung ihres Spreizschlitzes auf dem Aufnahmedorn gehaltenen Sicherungsringe mittels eines Drehantriebes in eine einheitliche definierte Lage bezüglich der Ausrichtung des Spreizschlitzes bringbar sind. Ein zusätzlicher Vorschlag zielt darauf, den Drehantrieb am Aufnahmedorn angreifen zu lassen.

Unter Ausnutzung der spezifischen Form des Sicherungsringes werden besonders einfache Ausrichtungsmittel vorgeschlagen, die darin bestehen, daß dem Drehantrieb ein ortsfestes Anschlagmittel für ein den Spreizschlitz begrenzendes, radial vorspringendes Ende des Sicherungsringes zugeordnet ist, so daß eine spezielle Lageüberwachung der Sicherungsringe sowie gesonderte Steuerungsmittel für die Drehbewegung des Drehantriebes entfallen können. Der Drehantrieb braucht lediglich eine Drehbewegung um einen ausreichend bemessenen Drehwinkel auszuführen, um auch Sicherungsringe mit maximaler Fehlorientierung definiert einheitlich auszurichten.

Eine praxisgerechte Weiterbildung besteht darin, daß das ortsfeste Anschlagmittel eine Durchtrittsbohrung für den Aufnahmedorn, eine axiale Anschlagfläche sowie eine aus dieser vorspringende Anschlagnase für den Sicherungsring aufweist.

Eine die Zuführung und Lage-orientierung einzelner Sicherungsringe aufeinander abstimmende Weiterbildung der Erfindung besteht darin, daß der Aufnahmedorn mit einem federnd gelagerten Auflagebolzen in Wirkverbindung steht, welcher als Teil einer Führungsbahn zum Zufördern und zur Einzelplazierung der Sicherungsringe sowie als Stellmittel zur seitlichen Auslenkung von die Führungsbahn in den Randzonen der Sicherungsringe überdeckenden Schwenkhebeln ausgebildet ist. Auf diese Weise ist die Zuführung und Plazierung einzelner Sicherungsringe in Flachlage unterhalb des Aufnahmedorns gewährleistet, so daß ihre Aufnahme durch den Drehdorn präzise erfolgen kann. Zur Perfektionierung der Montagevorrichtung ist weiterhin vorgesehen, daß zwischen dem Lage-orientierungsanschlag bzw. dem Aufnahmedorn und einem Montagemittel für die Sicherungsringe ein die Sicherungsringe gespreizt haltendes Aufnahme- und Abgabemittel hin- und herfahrbar angeordnet ist.

Der mit der Erfindung erzielte Vorteil besteht darin, daß durch die exakte Einzelausrichtung der Sicherungsringe diese lose und in unorientierter Lage verwendet bzw. zugeführt werden können, womit sich ihre Lagerhaltung wesentlich einfacher und kostengünstiger gestaltet.

Darüber hinaus ergeben sich durch die zeitliche und räumliche Trennung der Arbeitsgänge Aufdornen und Ausrichten vom Arbeitsgang Montage einerseits günstige zeitliche Überschneidungen, die für kurze Taktzeiten wichtig sind, und andererseits flexible Einsatzmöglichkeiten, indem die Montagestation als Roboterarbeitsgerät ausgebildet werden kann, wobei nach jeder Montage eines Sicherungsringes das Aufnahme- und Abgabemittel neu geladen bzw. mit einem geladenen gewechselt werden müßte, was an der Ablagestelle des Robotermontagegerätes geschehen kann, während dieser mit anderen Werkzeugen arbeitet.

Die Erfindung wird nachstehend anhand des in den beigefügten Abbildungen dargestellten Ausführungsbeispiels näher erläutert.

Hierbei zeigen:

Figur 1 eine Vorderansicht des erfindungsgemäßen Montagegerätes in einer Arbeitsstellung zum Zuführen bzw. Aufdornen und Ausrichten der Sicherungsringe,

Figur 2 eine Seitenansicht des Montagegerätes gemäß Figur 1 in einer einem Transportmittel für die Sicherungsringe zugewandten Arbeitsstellung,

Figur 3 das Transportmittel gemäß Figur 2 in einer Montagestellung zum Montieren der Sicherungsringe im Bereich einer Montagestation und

Figuren 4 bis 11 den Funktionsablauf des Montagevorgangs wiedergebende Arbeitsstellungen der zusammenwirkenden Elemente der Montagevorrichtung.

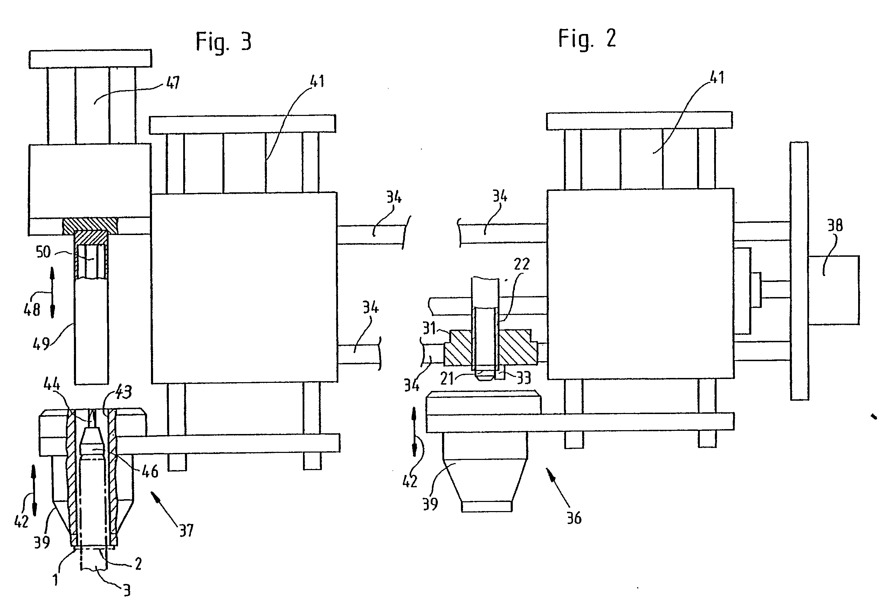

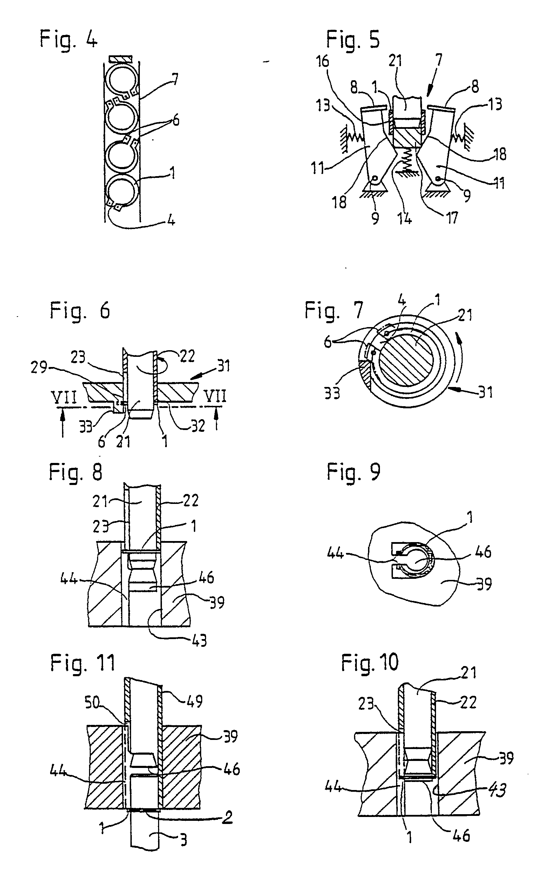

Die in den Abbildungen dargestellte Montagevorrichtung dient zur Montage von Sicherungsringen 1 in Ringnuten 2 von Werkstücken 3, beispielsweise von Wellen oder Achsen gemäß Figur 3. Die Sicherungsringe 1 sind gemäß Figur 4 mit einem radialen Spreizschlitz 4 versehen, der von vorspringenden Anschlagnasen 6 begrenzt ist.

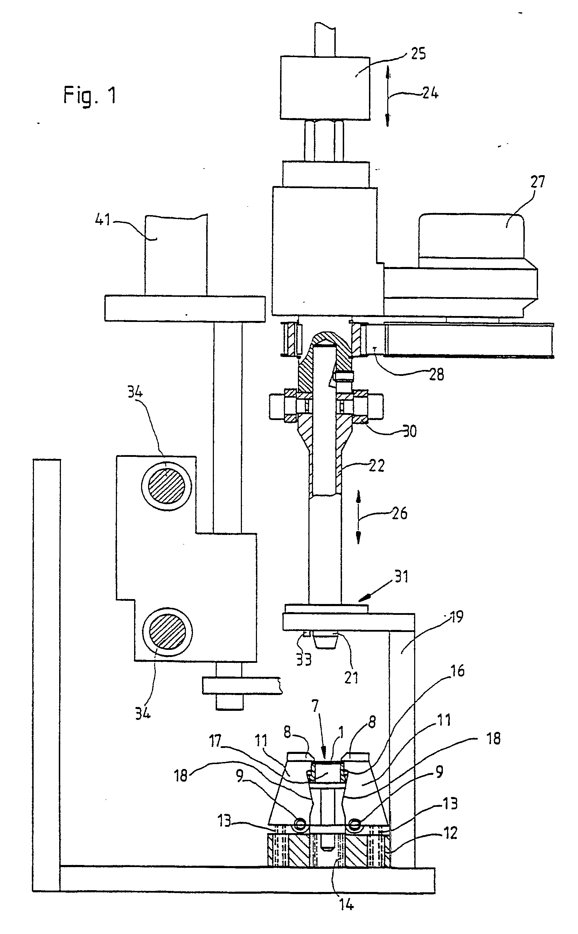

Die Montagevorrichtung weist eine in Figur 4 in der Draufsicht und in Figur 1 senkrecht zur Zeichenebene verlaufende Führungsbahn 7 zur einreihigen Zuführung der Sicherungsringe 1 auf. Um zu verhindern, daß sich Sicherungsringe 1 beim Zufördern übereinanderschieben, ist die Führungsbahn 7 im Bereich ihrer seitlichen Ränder in einer Höhe von etwas mehr als die Dicke der Sicherungsringe 1 von Führungsleisten 8 überdacht bzw. begrenzt. Am vorderen Abgabeende der Führungsbahn 7 sind die Führungsleisten 8 Bestandteil von an Drehgelenken 9 gelagerten Schwenkhebeln 11, welche entgegen der Kraft von im Fundament 12 der Montagevorrichtung abgestützten Rückstellfedern 13 gesteuert verschwenkbar sind. Als Steuermittel dient ein entgegen der Kraft einer Rückstellfeder 14 innerhalb einer Führungshülse 16 abwärts einfedernder Auflagebolzen 17, welcher in der in Figur 1 gezeigten Stellung einen Teil der Führungsbahn 7 für die Sicherungsringe 1 bildet. Die inneren Begrenzungskanten der Schwenkhebel 11 bilden Steuerkurven 18, die beim Einfedern des Auflagebolzens 17 beaufschlagt werden.

Zentrisch zum Auflagebolzen 17 ist oberhalb der Führungsbahn 7 in einem Gestell 19 der Montagevorrichtung ein mit einer kegelstumpfartigen Spitze versehener Aufnahmedorn 21 geführt, dessen Außendurchmesser etwas größer ist als der Innendurchmesser eines entspannten Sicherungsringes 1. Der Aufnahmedorn 21 ist drehfest mit einer relativ zum Aufnahmedorn axial beweglichen Hülse 22 verbunden, die gemäß Figur 6 mit einer seitlichen schlitzförmigen Aussparung 23 versehen ist. Zum gemeinsamen Auf- und Abwärtshub von Aufnahmedorn 21 und Hülse 22 in Richtung des Doppelpfeils 24 dient ein Hubantriebsmittel 25. Zur separaten axialen Hubbewegung der Hülse 22 relativ zum Aufnahmedorn 21 in Richtung des Doppelpfeils 26 dient ein an einer Gelenkgabel 30 an der Hülse 22 angreifender nicht dargestellter Hubantrieb. Darüber hinaus ist der Aufnahmedorn 21 jeweils um 360° in einer Richtung verdrehbar, wozu ein an der verdrehfest mit dem Aufnahmedorn 21 verbundenen Hülse 22 ein Drehantrieb 27 mittels eines Zahnriemens 28 angreift. Aufnahmedorn 21 und Hülse 22 durchdringen eine Durchtrittsbohrung 29 eines Anschlagmittels 31, das mit einer axialen Anschlagfläche 32 für den Sicherungsring 1 und mit einer vorspringenden Anschlagnase 33 für eine der radialen Anschlagnasen 6 des Sicherungsringes 1 versehen ist.

Des weiteren weist die Montagevorrichtung ein auf Führungen 34 gemäß den Figuren 2 und 3 zwischen einer Ladestellung 36 gemäß Figur 2 und einer Montagestellung 37 gemäß Figur 3 mittels eines Antriebes 38 hin- und herfahrbares Aufnahme- und Abgabemittel in Form einer Matrize 39 auf, die außerdem mittels eines Hubantriebes 41 in Richtung des Doppelpfeils 42 auf- und abbewegbar ist. Die Matrize ist innerhalb einer Bohrung 43 auf deren ganzer Länge mit einem Paßstück 44 für den Spreizschlitz 4 des Sicherungsringes versehen, welches einen teilzylindrischen Träger 46 mit kegelstumpfartiger Spitze zur Aufnahme des Sicherungsringes 1 aufweist.

In ihrer Montagestellung 37 ist der Matrize 39 oberseitig eine mittels eines Hubantriebes 47 in Richtung des Doppelpfeils 48 auf- und abbewegbare Montagehülse 49 zugeordnet, die mit einer längsverlaufenden schlitzförmigen Aussparung 50 zur freien Beweglichkeit über dem Paßstück 44 der Matrize 39 versehen ist.

Die Wirkungsweise der Montagevorrichtung ist wie folgt: Lose, d. h. nicht lageorientierte Sicherungsringe 1, die durch nicht dargestellte sogenannte Entwirrgeräte vereinzelt und lageorientiert werden, werden entlang der sich diesen Geräten anschließenden Führungsbahn 7 gemäß Figur 4 einzeln aufeinanderfolgend zugeführt. Die Sicherungsringe 1 liegen dabei glatt (auf der Führungsbahn 1 auf, wobei es ihnen jedoch noch an der drehrichtigen Lage mangelt, d. h., daß die Öffnung ihres Spreizschlitzes 4 in jede Richtung außer in die der beiden seitlichen Begrenzungen der Führungsbahn 7 zeigt. Am Ende der Führungsbahn 7 erreicht der voreilende Sicherungsring 1 den bündig mit der Grundfläche der Führungsbahn 7 verlaufenden Auflagebolzen 17 an der in Figur 1 dargestellten Übergabestelle zentrisch unterhalb des Aufnahmedornes 21. Anschließend wird der Aufnahmedorn 21 durch den Hubantrieb 25 abwärts gegen den Auflagebolzen 17 bewegt, welcher entgegen der Wirkung der Feder 14 zurückweicht und den Aufnahmedorn 21 gemäß Figur 5 in die Führungshülse 16 eintauchen läßt, wobei der Sicherungsring 1 aufgedornt und geringfügig vorgespreizt bzw. aufgeweitet wird. Gleichzeitig wird der Sicherungsring von den ihn zuvor oberseitig übergreifenden Führungsleisten 8 dadurch freigegeben, daß der Auflagebolzen 17 mit seiner Unterkante die Steuerkurven 18 der Schwenkhebel 11 beaufschlagt und diese entgegen der Kraft der Rückstellfedern 13 auswärtsschwenkt. Anschließend fährt der Aufnahmedorn 21 mit dem vorgespreizten Sicherungsring 1 so weit nach oben, bis der Sicherungsring 1 die Anschlagfläche 32 des Anschlagmittels 31 berührt. Gemäß den Figuren 6 und 7 wird der Aufnahmedorn 21 anschließend mit Hilfe des Drehantriebes 27 gemäß Figur 1 gedreht, so daß der Sicherungsring 1 mit einer den Spreizschlitz 4 begrenzenden Anschlagnase 6 an der Anschlagnase 33 des Anschlagmittels 31 anschlägt und damit für die weitere Handhabung bezüglich der Ausrichtung des Spreizschlitzes 4 definiert drehsinnig lage-orientiert ist.

Während der zuvor beschriebenen Arbeitsvorgänge wird gleichzeitig in der Montagestellung 37 gemäß Figur 3 ein Sicherungsring auf ein Werkstück 3 montiert.

Anschließend fährt die Matrize 39 aus der Montagestellung 37 zwischen dem Aufnahmedorn 21 bzw. das Anschlagmittel 31 und die Führungsbahn 7 einerseits fluchtend mit dem Aufnahmedorn 21 und andererseits in einer Flucht mit dem Auflagebolzen 17. Diese Position der Matrize 39 ist als Ladestellung 36 in Figur 2 dargestellt. Durch erneuten Abwärtshub mittels des Hubantriebes 25 wird die gesamte Einheit aus Aufnahmedorn 21 und diesen umschließende Hülse 22 so weit abwärtsbewegt, bis gemäß Figur 8 der Kegelstumpf des Aufnahmedornes 21 auf den Kegelstumpf des Trägers 46 innerhalb der Matrize 39 aufsetzt. Durch den darauffolgenden separaten, an der Gabel 30 eingeleiteten Abwärtshub der Hülse 22 relativ zum Aufnahmedorn 21 wird der vorgespreizte Sicherungsring 1 gemäß den Figuren 8 und 9 in die Bohrung 43 der Matrize 39 überführt, wobei der durch die Vorspreizung aufgeweitete Spreizschlitz 4 durch das Paßstück 44 der Matrize 39 ausgefüllt wird. Von diesem Paßstück kann der Sicherungsring 1 nicht heruntergleiten, da er formschlüssig an seiner Außenfront bzw. Innenform aufgenommen ist. Der Sicherungsring 1 wird durch die Hülse 22 gemäß Figur 10 bis auf den zylindrischen Teil des Trägers 46 aufgeschoben. Sobald Aufnahmedorn 21 und Hülse 22 wieder aufwärts zurückgezogen sind, wird die Matrize 39 mit dem vormontierten Sicherungsring 1 aus der Ladestellung 36 gemäß Figur 2 durch den Antrieb 38 in die in Figur 3 gezeigte Montagestellung 37 überführt, in der die Matrize 39 ebenfalls eine zentrierte Stellung unterhalb der Montagehülse 49 bzw. oberhalb des Werkstücks 3 einnimmt. Dort wird die Matrize 39 durch den Hubantrieb 41 soweit über das Werkstück 3 geschoben, bis sich ihr unterer Rand mit dem Ende des Paßstückes 44 unmittelbar an der Sicherungsringnut 2 befindet. Die durch den Hubantrieb 47 abwärtsbewegte Montagehülse 49 schiebt gemäß Figur 11 den Sicherungsring 1 von der zylindrischen Fläche des Trägers 46 bis zur Ringnut 2, wobei der Sicherungsring 1 so lange, d.h. bis zum Erreichen der Ringnut 2 durch das Paßstück 44 und die Innenform der Matrize 39 am Entspannen gehindert wird und damit auf die Oberfläche des Werkstücks 3 keine Kratzwirkung ausüben kann. Sowie der Spreizschlitz 4 des Sicherungsringes 1 über der Ringnut 2 durch das Paßstück 44 freigegeben wird, wird der Sicherungsring 1 entspannt, so daß er in die Ringnut 2 einschnappt.

## Ansprüche

1. Verfahren zur automatischen Montage von mit einem radial durchgehenden Spreizschlitz versehenen, radial federnden Sicherungsringen in Ringnuten zylindrischer Werkstücke, bei dem die Sicherungsringe durch Aufdornen auf einen größeren Innendurchmesser aufgespreizt, durch Aufkeilen bzw. Ausfüllen des Spreizschlitzes im gespreizten Zustand gehalten, in einer zum Werkstück zentrierten Lage über die Ringnuten verbracht und entspannt bzw. montiert werden, dadurch gekennzeichnet, daß die Sicherungsringe in willkürlicher Orientierung zugeführt und aufgedornt werden und daß sie anschließend im aufgedornten Zustand individuell drehsinnig lageorientiert werden.

2. Verfahren nach Anspruch 1, dadurch gekennzeichnet, daß die Sicherungsringe durch Drehen des Aufnahmedornes um seine Längsachse in eine einheitliche drehrichtige Lage verbracht werden.

3. Verfahren nach Anspruch 1 und/oder 2, dadurch gekennzeichnet, daß die Sicherungsringe mit einem den Spreizschlitz begrenzenden Ende gegen einen definierten Anschlag gedreht werden.

4. Verfahren nach einem der Ansprüche 1 bis 3, dadurch gekennzeichnet, daß die Sicherungsringe in Aufeinanderfolge einzeln, flachliegend zugeführt, aufgedornt und gedreht werden.

5. Verfahren nach einem der Ansprüche 1 bis 4, dadurch gekennzeichnet, daß das Aufdornen bzw. Aufspreizen und Lageorientieren der Sicherungsringe räumlich und zeitlich unabhängig von ihrer Montage auf den Werkstücken erfolgt.

6. Vorrichtung zur automatischen Montage von mit einem radial durchgehenden Spreizschlitz versehenen, radial federnden Sicherungsringen in Ringnuten zylindrischer Werkstücke, mit einem Aufnahmedorn zum Aufspreizen der Sicherungsringe sowie einem den Spreizschlitz aufkeilenden bzw. ausfüllenden, sich bei der Montage des Sicherungsringes bis zur Ringnut des Werkstückes erstreckenden Paßstück, dadurch gekennzeichnet, daß die mit willkürlicher Orientierung ihres Spreizschlitzes (4) auf dem Aufnahmedorn (21) gehaltenen Sicherungsringe (1) mittels eines Drehantriebes (27) in eine einheitliche definierte Lage bezüglich der Ausrichtung des Spreizschlitzes bringbar sind.

7. Vorrichtung nach Anspruch 6, dadurch gekennzeichnet, daß der Drehantrieb (27) am Aufnahmedorn (21) angreifend ausgebildet ist.

8. Vorrichtung nach Anspruch 6 und/oder 7, dadurch gekennzeichnet, daß dem Drehantrieb (27) ein ortsfestes Anschlagmittel (31) für ein den Spreizschlitz (4) begrenzendes, radial vorspringendes Ende (6) des Sicherungsringes (1) zugeordnet ist.

9. Vorrichtung nach einem der Ansprüche 6 bis 8, dadurch gekennzeichnet, daß das ortsfeste Anschlagmittel (31) eine Durchtrittsbohrung (29) für den Aufnahmedorn (21), eine axiale Anschlagfläche (32) sowie eine aus dieser vorspringende Anschlagnase (33) für den Sicherungsring (1) aufweist.

10. Vorrichtung nach einem der Ansprüche 6 bis 9, dadurch gekennzeichnet, daß der Aufnahmedorn (21) mit einem federnd gelagerten Auflagebolzen (17) in Wirkverbindung steht, welcher als Teil einer Führungsbahn (7) zum Zufördern und zur Einzelplazierung der Sicherungsringe (1) sowie als Steuermittel zur seitlichen Auslenkung von die Führungsbahn in den Randzonen der Sicherungsringe überdeckenden Schwenkhebeln (11) ausgebildet ist.

11. Vorrichtung nach einem der Ansprüche 6 bis 10, dadurch gekennzeichnet, daß zwischen dem Anschlagmittel (31) bzw. dem Aufnahmedorn (21) und einem Montagemittel (49) für die Sicherungsringe (1) ein die Sicherungsringe gespreizt haltendes Aufnahme- und Abgabemittel (39) hin- und herfahrbar angeordnet ist.

Fig. 1

EP 0 391 120 A1

Fig. 2

Fig. 3

EP 0 391 120 A1

Fig. 4

Fig. 5

Fig. 6

Fig. 7

Fig. 8

Fig. 9

Fig. 11

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| A | <u>DD - A1 - 265 109</u><br>(VEB FORSCHUNG, ENTWICKLUNG UND RATIONALISIERUNG)<br>   * Seite 2, vorletzter Absatz, Zeile 1-2 *<br>   -- | 1 | B 23 P 19/08<br>B 65 G 47/24 |
| A | <u>DE - A1 - 2 840 863</u><br>(GOETZE AG)<br>   * Ansprüche 1,3; Seite 6, letzter Absatz, Seite 7, 1. Absatz; Fig. 1,2 *<br>   -- | 2,6,7 | |
| A | <u>DE - A1 - 3 403 292</u><br>(BW-WEBER VERWALTUNGSGESELL-SCHAFT)<br>   * Seiten 9,10; Fig. 1,5,6 *<br>   ---- | 5,11 | |
| | | | **RECHERCHIERTE SACHGEBIETE (Int Cl.⁵)**<br><br>B 23 P 19/00<br>B 65 B 35/00<br>B 65 G 47/00 |

Der vorliegende Recherchenbericht wurde für alle Patentansprüche erstellt.

| Recherchenort<br>WIEN | Abschlußdatum der Recherche<br>14-05-1990 | Prüfer<br>BISTRICH |
|---|---|---|